# EUROPÄISCHE PATENTSCHRIFT

(11) **EP 2 256 012 B1**
(45) Veröffentlichungstag und Bekanntmachung des Hinweises auf die Patenterteilung: **25.01.2012**
(21) Anmeldenummer: 10163279.2
(22) Anmeldetag: 19.05.2010
(51) Int. Cl.: B60T 13/74, B60T 17/22, B60T 8/00, B60T 13/66

(54) **Verfahren und Steuergerät zum Checken eines elektrisch gesteuerten Feststellbremssystems eines Fahrzeugs**
Method and control device for checking an electrically controlled handbrake for a vehicle
Procédé et appareil de commande pour contrôler le fonctionnement d'un système de frein de service commandé électriquement d'un véhicule automobile

(30) Priorität: 20.05.2009 DE 102009022228
(43) Veröffentlichungstag der Anmeldung: 01.12.2010
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Schönmann, Kurt

(56) Entgegenhaltungen:
- EP-A1- 0 924 128
- EP-A1- 1 439 102
- WO-A1-2004/076254
- WO-A1-2004/106131
- WO-A1-2006/010735
- WO-A1-2006/045841
- WO-A1-2008/092683
- DE-A1- 19 858 583
- DE-A1-102004 037 303
- DE-A1-102005 024 343
- DE-A1-102007 014 427
- DE-B3-102007 005 871

## Beschreibung

Die Erfindung betrifft ein Verfahren zum Betreiben eines elektrisch gesteuerten Feststellbremssystems eines Fahrzeugs, insbesondere eines Nutzfahrzeugs, mit einem elektronischen Steuergerät, einer elektropneumatischen Vorsteuergruppe und einem Feststellbremszylinder.

Die Erfindung betrifft weiterhin ein elektronisches Steuergerät, das zur Durchführung eines erfindungsgemäßen Verfahrens eingerichtet ist.

Die Verbesserung der Effizienz von Fahrzeugen, insbesondere von Nutzfahrzeugen, ist sowohl unter ökonomischen als auch unter ökologischen Aspekten vorteilhaft, wobei insbesondere der Energieverbrauch beim Betrieb des Fahrzeugs gesenkt werden soll. Dabei ist darauf zu achten, dass die Verbesserung der Effizienz nicht zu Lasten der Betriebssicherheit erfolgt. Neben der Möglichkeit direkt den Wirkungsgrad des das Fahrzeug antreibenden Antriebsmotors zu verbessern, besteht die Möglichkeit auf der Verbraucherseite bei anderen Teilsystemen, zum Beispiel einem Feststellbremssystem, die für den Betrieb notwendige Energie zu reduzieren, um auf diese Weise die Energieeffizienz des Fahrzeugs zu erhöhen.

Der vorliegenden Erfindung liegt daher die Aufgabe zugrunde, ein energiesparendes und zugleich sicheres Verfahren zum Betreiben einer elektrisch gesteuerten Feststellbremse bereitzustellen.

Diese Aufgabe wird mit den Merkmalen des unabhängigen Anspruchs gelöst.

Vorteilhafte Ausführungsformen der Erfindung sind in den abhängigen Ansprüchen angegeben.

Die Erfindung baut auf dem gattungsgemäßen Verfahren dadurch auf, dass ein Beschleunigungswert a des Fahrzeugs überwacht wird und bei Unterschreitung eines vorgebbaren negativen Beschleunigungsschwellwertes a_{g} das elektrisch gesteuerte Feststellbremssystem durch eine erste Testroutine überprüft wird. Auf diese Weise kann eine nicht zyklische Überwachung beim Betrieb der Feststellbremse erfolgen, die eine Überprüfung des Feststellbremssystems an das Vorliegen eines negativen Beschleunigungswertes a < a_{g} koppelt. Die Überprüfung der Feststellbremse wird also verdachtsabhängig beziehungsweise ereignisgesteuert gestartet, im Gegensatz zu einer sonst üblichen verdachtsunabhängigen Überprüfung, die beispielsweise zyklisch gesteuert sein kann. Dies spart Energie und ergibt somit eine Effizienzsteigerung, da die Überprüfung der Feststellbremse seltener und nur bei Vorliegen eines Verdachts auf einen Defekt erfolgt. Die Überprüfung der Funktion der Feststellbremse an sich ist vorteilhaft, da die Feststellbremse konstruktionsbedingt bei einem Defekt schließt und dabei eine entsprechende Bremswirkung auf das Fahrzeug ausübt, die zu Auffahrunfällen aufgrund der spontanen Verzögerung führen kann.

Nützlicherweise kann vorgesehen sein, dass das elektrisch gesteuerte Feststellbremssystem nach dem Ausschalten einer Zündung durch eine zweite Testroutine überprüft wird. Das Ausschalten der Zündung erfolgt üblicherweise bei einem abgestellten Fahrzeug, so dass die zweite Testroutine gegenüber der ersten Testroutine anders aufgebaut sein kann und beispielsweise auch die Überprüfung von Teilen der Feststellbremse umfassen kann, die während der Fahrt nicht getestet werden können.

Vorteilhafterweise kann vorgesehen sein, dass das elektrisch gesteuerte Feststellbremssystem nach dem Einschalten einer Zündung durch eine dritte Testroutine überprüft wird. Auch nach dem Einschalten der Zündung, das heißt bei einer Wiederinbetriebnahme eines zunächst abgestellten Fahrzeugs, ist das Überprüfen der Feststellbremse durch die dritte Testroutine vorteilhaft, die wiederum anders als die erste Testroutine und/oder die zweite Testroutine aufgebaut sein kann.

Es kann vorgesehen sein, dass das elektrisch gesteuerte Feststellbremssystem nach dem manuellen Betätigen eines Tasters durch eine vierte Testroutine überprüft wird. Auf diese Weise kann bei Bedarf eine Überprüfung des Feststellbremssystems eingeleitet werden, was beispielsweise nach einer Instandsetzung aufgrund eines vorangegangenen Defektes zur Funktionsüberprüfung vorteilhaft sein kann.

Vorzugsweise kann vorgesehen sein, dass ein Endergebnis der Testroutine gespeichert wird. Durch das Sichern des Endergebnisses kann beispielsweise zu Dokumentationszwecken eine spätere Auswertung erfolgen. Des Weiteren können gespeicherte Endergebnisse zur Modifizierung später durchgeführter Testroutinen herangezogen werden.

Besonders bevorzugt ist, dass die Testroutine Teilprüfungen umfasst, die nacheinander durchgeführt werden, dass die Testroutine nach einer Teilprüfung abgebrochen wird, wenn ein Ergebnis dieser Teilprüfung das Endergebnis der Testroutine festlegt, und dass das Ergebnis als Endergebnis übernommen wird. Auf diese Weise kann die zur Durchführung der Testroutine benötigte Zeit reduziert werden, so dass der notwendige Energieaufwand weiter reduzierbar ist. Die Testroutine ist also ereignisgesteuert, wobei je nach Ergebnis einer bereits durchgeführten Teilprüfung eine oder mehrere noch auszuführende Teilprüfungen übergangen werden. Es ist auch denkbar, in Abhängigkeit von einem Ergebnis einer bereits durchgeführten Teilprüfung eine oder mehrere noch auszuführende Teilprüfungen zu modifizieren.

Weiterhin kann vorgesehen sein, dass Daten der Testroutine in flüchtigem Speicher vorgehalten werden und das Endergebnis in nicht flüchtigen Speicher geschrieben wird. Da ein nicht flüchtiger Speicher im Vergleich zu flüchtigem Speicher träge ist, kann die Dauer der Testroutine verkürzt werden, wenn lediglich das Endergebnis in nicht flüchtigen Speicher geschrieben wird.

Insbesondere kann vorgesehen sein, dass der Feststellbremszylinder über eine Notlösevorrichtung belüftet wird, wenn ein Fehler des elektrischen Feststellbremssystems erkannt wird. Auf diese Weise kann der Betrieb des Feststellbremssystems auch bei einem Defekt aufrechterhalten werden, wobei üblicherweise die Notlösevorrichtung ein Einfallen der Feststellbremse während der Fahrt vermeiden soll. Das Schalten der Notlösevorrichtung kann bereits vor Abschluss der Testroutine erfolgen und insbesondere bei Erkennung einer Bremswirkung a < a_{g} ohne entsprechenden Fahrzeug- oder Fahrerwunsch auch prophylaktisch vor der Erkennung eines Defekts in dem Feststellbremssystem erfolgen, um die Reaktionszeit des Systems zu verringern.

Nützlicherweise kann vorgesehen sein, dass ein Bremslicht des Fahrzeugs aktiviert wird, wenn ein Fehler des elektrischen Feststellbremssystems erkannt wird. Durch das Einschalten des Bremslichtes kann der Fahrer eines nachfolgenden Fahrzeugs von der eventuell einsetzenden Verzögerung informiert werden, so dass Auffahrunfälle verhindert werden. Das Bremslicht kann nach dem Auslösen der Notlösefunktion wieder ausgeschaltet werden, wenn keine unerwünschte Verzögerung durch die Feststellbremse mehr vorliegt.

Es kann vorgesehen sein, dass eine Wiederinbetriebnahme des Fahrzeugs nach dem Einschalten einer Zündung unterbunden wird, wenn ein Fehler des elektrischen Feststellbremssystems erkannt wird. Um eine Beschädigung des feststellbremssystems durch Überbelastung zu verhindern, kann das Anfahren des Fahrzeugs unterbunden werden, wenn die Feststellbremse durch einen Defekt nicht lösbar ist. Weiterhin ist dieses Vorgehen unter Sicherheitsaspekten vorteilhaft, da ein Defekt des Feststellbremssystems möglicherweise sicherheitsrelevante Funktionen des Fahrzeugs negativ beeinflusst.

Es ist jedoch denkbar, dass bei Erkennung einer Notsituation eine Wiederinbetriebnahme des Fahrzeugs auch bei einem erkannten Defekt des elektrischen Feststellbremssystems erlaubt wird. Eine solche Notsituation kann beispielsweise dann vorliegen, wenn das Fahrzeug auf einem Bahnübergang zum Stehen kommt und unbedingt aus dieser Position entfernt werden muss. Die Notsituation kann beispielsweise basierend auf GPS-Daten festgestellt werden.

Vorteilhafterweise kann vorgesehen sein, dass ein Warnsignal an den Fahrer ausgegeben wird, wenn ein Fehler des elektrischen Feststellbremssystems erkannt wird. Durch ein entsprechendes Warnsignal kann der Fahrer des Fahrzeugs auf die notwendigen Instandsetzungsarbeiten aufmerksam gemacht werden, die durch den Defekt des Feststellbremssystems verursacht werden. Die Ausgabe des Warnsignals kann beispielsweise optisch oder akustisch erfolgen.

Die vorliegende Erfindung wird nun mit Bezug auf die begleitenden Zeichnungen anhand bevorzugter Ausführungsformen beispielhaft erläutert.

Es zeigen:
- Figur 1: ein Feststellbremssystem;
- Figur 2: einen schematischen Aufbau eines Steuergerätes für ein Feststell- bremssystem mit möglichen Anschlüssen;
- Figur 3: ein Flussdiagramm zur Veranschaulichung einer ersten Testroutine;
- Figur 4: ein Flussdiagramm zur Veranschaulichung einer zweiten bezie- hungsweise einer dritten Testroutine; und
- Figur 5: ein Flussdiagramm zur Veranschaulichung einer vierten Testroutine.

In den folgenden Zeichnungen bezeichnen gleiche Bezugszeichen gleiche oder gleichartige Teile.

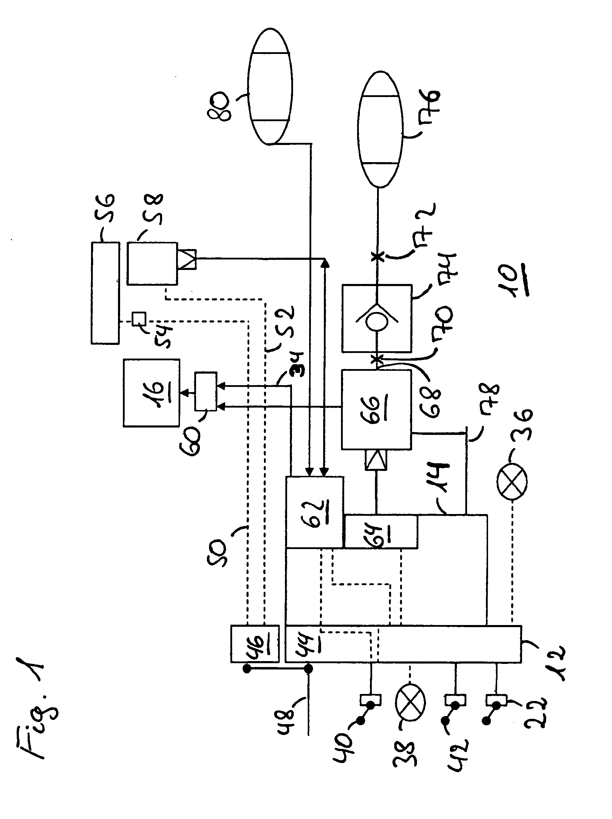

In Figur 1 zeigt ein Feststellbremssystem. Das dargestellte Feststellbremssystem 10 umfasst ein Steuergerät 12, eine Vorsteuergruppe 14 und einen Feststellbremszylinder 16, der exemplarisch für alle Feststellbremszylinder 16 eines Feststellbremssystems dargestellt ist. Das Steuergerät 12 ist mit einem Anschluss 48 an einen Fahrzeugbus (CAN) ausgestattet und mit einem Taster 22, einem Notlösegeber 40 und einem Feststellbremsgeber 42 verbunden. Das Steuergerät 12 ist in der Lage, eine Ventileinrichtung 62 und eine weitere Ventileinrichtung 64 der Vorsteuergruppe 14 direkt anzusteuern, um die Funktionen des Feststellbremssystems 10 zu steuern. Auf diese Weise ergeben sich kurze Schaltzeiten für die beiden Ventileinrichtungen 62, 64. Das Feststellbremssystem 10 ist über die Vorsteuergruppe 14 elektrisch schaltbar und wird über eine Druckluftversorgung 78 mit dem notwendigen Druckmittel zum Betätigen des dargestellten Feststellbremszylinders 16 versorgt. Die Druckluft wird dem Feststellbremszylinder 16 über ein Relaisventil 66 und ein Wechselventil 60 zugeführt, wobei das Relaisventil 66 von der weiteren Ventileinrichtung 64 der Vorsteuergruppe 14 angesteuert wird. Falls die Druckversorgung des Feststellbremszylinders 16 unterbrochen wird, zum Beispiel durch einen Leitungsbruch zwischen dem Relaisventil 66 und dem Wechselventil 60, kann über eine Notlösevorrichtung 34, die von der Ventileinrichtung 62 geschaltet wird, der Druck in dem Feststellbremszylinder 16 aufrechterhalten werden. Durch die kurzen Schaltzeiten der beiden Ventileinrichtungen 62, 64 ist ein schnelles Reagieren durch Umschalten der Druckversorgung des Feststellbremszylinders 16 möglich. Die Druckversorgung der Notlösevorrichtung 34 wird über einen Druckluftvorratsbehälter 80 unabhängig von der Druckluftversorgung 78 sichergestellt. Weiterhin besitzt die Notlösevorrichtung 34 eine eigene nicht dargestellte Entlüftungsmöglichkeit. Die Ventileinrichtung 62 umfasst weiterhin einen Druckausgang für ein Anhängersteuermodul 58 welches über einen Anschluss 52 der Betriebsbremse auch mit einem EBS-Steuergerät 46 gekoppelt ist. Das EBS-Steuergerät 46 ist auch über den Anschluss 48 an den Fahrzeugbus gekoppelt und steuert weiterhin einen Anhänger 56 über eine Anschlussdose 54 an, die über einen Anschluss 50 des Anhängers mit dem EBS-Steuergerät 46 gekoppelt ist. Das Steuergerät 12 ist in der Lage, ein Bremslicht 36 und ein Warnsignal 38 anzusteuern. Das Wechselventil 60 leitet den höheren der beiden anstehenden Eingangsdrücke an den Feststellbremszylinder 16 weiter, das heißt entweder den durch die Notlösevorrichtung 34 bereitgestellten Druck oder den über das Relaisventil 66 bereitgestellten normalen Versorgungsdruck. Das Relaisventil 66 verfügt über einen Entlüftungsausgang 68, an dem über einen Druckluftleitungsstecker 70 ein Anschlussmodul 74, welches im Wesentlichen ein Rückschlagventil umfasst, anschließbar ist. Das Anschlussmodul 74 verhindert eine Entlüftung des Feststellbremszylinders 16 über den Entlüftungsausgang 68 und kann, falls ein externer Druckluftvorrat 76 über einen weiteren Druckluftleitungsstecker 72 mit dem Anschlussmodul 74 gekoppelt wird, zum Lösen der Feststellbremse des Fahrzeugs durch Belüften des Feststellbremszylinders 16 verwendet werden, ohne das Fahrzeug selbst in Betrieb nehmen zu müssen, was beispielsweise beim Abschleppen eines defekten Fahrzeuges oder in einer Werkstatt vorteilhaft sein kann. In der Figur 1 sind sowohl das Anschlussmodul 74 als auch der externe Druckluftvorrat 76 in gekoppeltem Zustand mit dem Feststellbremssystem 10 dargestellt. Sie können einzeln über die Druckluftleitungsstecker 70, 72 aus dem System entfernt werden. Das Steuergerät 12 umfasst eine Notlöseverdrahtung 44, die weitgehend unabhängig von den übrigen Komponenten des Steuergerätes 12 arbeitet, um auch bei einem defektbedingten Ausfall des Steuergerätes 12 die Feststellbremse durch das Betätigen der Notlösevorrichtung 34 öffnen zu können. Der Druckluftleitungsstecker 70 kann zu diesem Zweck leicht zugänglich an dem Fahrzeug angeordnet sein. Die Anwesenheit des Anschlussmoduls 74 kann beispielsweise über einen nicht dargestellten Drucksensor an dem Entlüftungsausgang 68 oder durch das Schließen eines Kontaktes bei der Montage des Anschlussmoduls an dem Druckluftleitungsstecker 70 detektiert werden. Ein auf diese Weise erzeugtes Signal kann insbesondere durch das Steuergerät 12 erzeugte Steuersignale für das Feststellbremssystem 10 zeitweilig außer Kraft setzen oder unterdrücken, um eine Beschädigung des Feststellbremssystems 10 durch Fehlbelastungen zu verhindern und um ein störungsfreies externes Belüften zu erlauben. Es ist denkbar, auch an der Entlüftungsmöglichkeit der Notlösevorrichtung 34 eine Anschlussmöglichkeit für eine externe Belüftung der Feststellbremse vorzusehen.

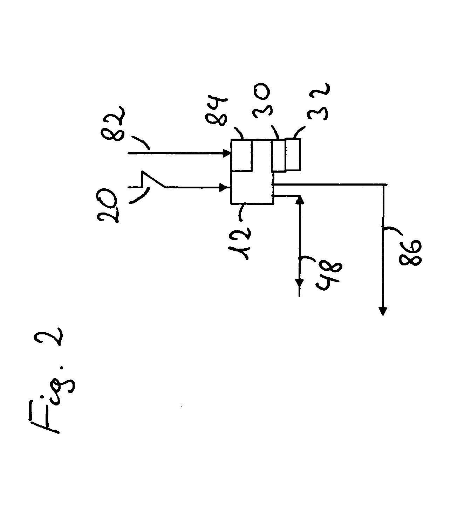

Figur 2 zeigt einen schematischen Aufbau eines Steuergerätes für ein feststellbremssystem mit möglichen Anschlüssen. Das dargstellte Steuergerät 12 umfasst einen flüchtigen Speicher 30 und einen nicht flüchtigen Speicher 32, in denen jeweils unterschiedliche Daten abgelegt werden können. Insbesondere kann in dem flüchtigen Speicher 30 eine auszuführende Testroutine ablaufen beziehungsweise die notwendigen Daten können zwischengespeichert werden während in dem nicht flüchtigen Speicher 32 ausschließlich das Endergebnis der Testroutine gespeichert werden kann. Auf diese Weise kann der Ablauf der Testroutine beschleunigt werden, da zeitintensive Schreib- und Löschzyklen des nicht flüchtigen Speichers 32 reduziert sind. Das Steuergerät 12 verfügt weiterhin über einen Energiespeicher 84, zum Beispiel in Form eines einfachen Kondensators, und über Anschlüsse an eine Zündung 20 und eine Dauerspannung 82 sowie an den Fahrzeugbus 48. Das Steuergerät 12 wird während einer Nachlaufzeit nach dem Ausschalten der Zündung 20 über die Dauerspannung 82 mit Energie versorgt. Der Energiespeicher 84 kann dazu ausgelegt sein, auch bei einem Stromausfall einen kontrollierten Betrieb des Steuergeräts 12 während der Nachlaufzeit zu gewährleisten. Das Steuergerät 12 ist mit der in dieser Figur nicht dargestellten Vorsteuergruppe 14 über einen Steueranschluss 86 gekoppelt, über welchen die verschiedenen Ventileinrichtungen 60, 62 der Vorsteuergruppe 14 durch das Steuergerät 12 ansteuerbar sind.

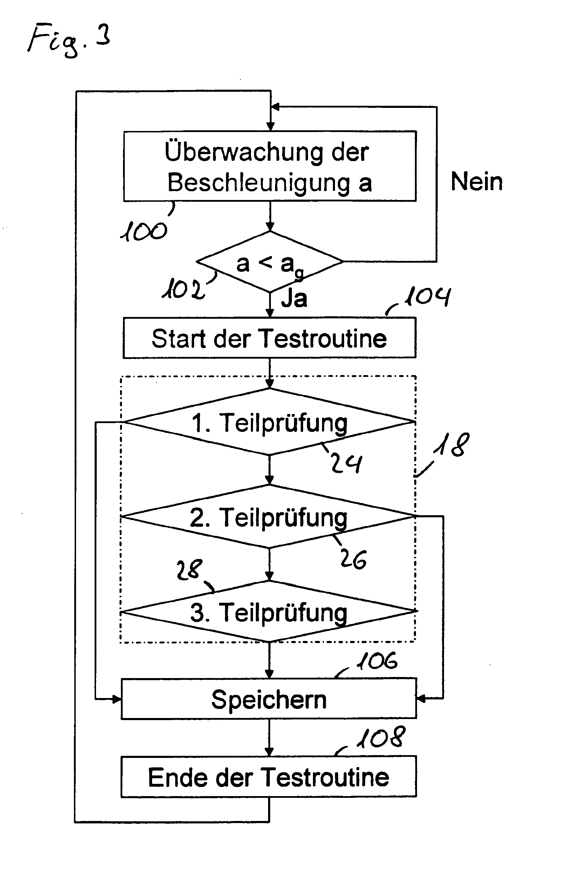

Figur 3 zeigt ein Flussdiagramm zur Veranschaulichung einer ersten Testroutine. Ausgangspunkt ist dabei die Überwachung der Beschleunigung a des fahrzeugs in Schritt 100. Die Überwachung der Fahrzeugbeschleunigung a erfolgt standardmäßig, zum Beispiel im Rahmen einer ESP-Regelschleife, oder durch das Steuergerät 12. Erfolgt die Überwachung im Rahmen einer ESP-Regelschleife, kann beispielsweise bei Unterschreiten eines negativen Beschleunigungsschwellwertes a_{g} ein Signal generiert werden, Schritt 102-Ja, welches den Start der Testroutine in Schritt 104 veranlasst. Dabei kann das erzeugte Signal als Wake-Up Signal für das Steuergerät 12 beziehungsweise der zum Durchführen einer Testroutine benötigten Komponenten des Steuergerätes 12 verwendet werden. Im Folgenden läuft eine erste Testroutine 18 ab, die eine erste Teilprüfung 24, eine zweite Teilprüfung 26 und eine dritte Teilprüfung 28 umfasst. Die Anzahl der Teilprüfungen kann variieren. Der erste Schritt nach dem Ende der Testroutine 18 ist Schritt 106 und umfasst ein Speichern des Endergebnisses der ersten Testroutine 18. Die Teilprüfungen 24, 26, 28 der ersten Testroutine 18 werden zeitlich nacheinander ausgeführt, wobei am Ende jeder Teilprüfung 24, 26, 28 ein Beenden der ersten Testroutine 18 möglich ist, falls das Ergebnis der gerade durchgeführten Teilprüfung 24, 26, 28 bereits das Endergebnis der gesamten ersten Testroutine 18 vorwegnimmt. Ist beispielsweise in der ersten Teilprüfung 24 ein Defekt des Feststellbremssystems festgestellt worden, so kann auf das Ausführen der zweiten Teilprüfung 26 und der dritten Teilprüfung 28 verzichtet werden, da das Ergebnis der ersten Testroutine 18 bereits feststeht und das Feststellbremssystem 10 defekt ist. Als erste Teilprüfung 24 kann beispielsweise vorgesehen sein, dass überprüft wird, ob die in Schritt 102 festgestellte negative Beschleunigung a auf einen Fahrerwunsch, zum Beispiel auf das Betätigen der Betriebsbremse, zurückführbar ist. Ist dies der Fall, so kann die erste Testroutine 18 abgebrochen werden, da offensichtlich kein Defekt des Feststellbremssystems 10 vorliegt. Die zweite Teilprüfung 26 kann beispielsweise Druckmessungen in den verschiedenen Leitungsabschnitten des Feststellbremssystems 10 umfassen, um festzustellen, ob die gemessene negative Beschleunigung a durch die Feststellbremse verursacht wird. Die dritte Teilprüfung 28 kann beispielsweise eine Funktionsüberprüfung verschiedener Komponenten des Feststellbremssystems 10 umfassen, wobei insbesondere elektrische und mechanische Komponenten ohne tatsächliches Betätigen des Feststellbremssystems 10 angesteuert werden können, um beispielsweise elektrische Leitungsdefekte oder elektrische Kurzschlüsse festzustellen. Es kann vorgesehen sein, dass eine Überprüfung der Anhängerbremse Teil der ersten Testroutine 18 ist. Die erste Testroutine 18 ist ereignisgesteuert, wobei gemäß dem dargestellten Flussdiagramm je nach Ergebnis einer bereits durchgeführten Teilprüfung 24, 26 eine oder mehrere noch auszuführende Teilprüfungen 26, 28 übergangen werden. Die erste Testroutine 18 kann dann entweder gemäß dem Flussdiagramm in Figur 1 beendet sein oder in nicht dargestellter Weise mit einer später auszuführenden Teilprüfung fortgesetzt werden. Beispielsweise kann das Ergebnis der ersten Teilprüfung 24 ein Übergehen der zweiten Teilprüfung 26 verursachen und die erste Testroutine 18 mit der dritten Teilprüfung 28 fortgesetzt werden oder das Ergebnis der ersten Teilprüfung 24 kann ein Beenden der ersten Testroutine 18 verursachen. Es ist auch denkbar in nicht dargestellter Weise, in Abhängigkeit von einem Ergebnis einer bereits durchgeführten Teilprüfung oder von einem früher abgespeicherten Endergebnis eine oder mehrere noch auszuführende Teilprüfungen zu modifizieren. Steht ein Defekt des Feststellbremssystems 10 fest, kann beispielsweise über die Notlösevorrichtung 34 versucht werden, die eingetretene Verzögerungswirkung a zu reduzieren, beispielsweise durch eine Luftnachversorgung. In diesem Zusammenhang kann vorgesehen sein, auch das Anhängersteuermodul 58 über seinen pneumatischen Eingang zu belüften, eine Lösebotschaft an den Anhänger 56 über den Anschluss 54 des Anhängers und/oder den CAN-Bus zu senden, um auch eine eventuell vorhandene unerwünschte ßremswirkung der Feststellbremse auf den Anhänger 56 zu eliminieren. Weiterhin kann das Steuergerät 12 auch das Bremslicht 36 aktivieren, um nachfolgende Fahrzeuge zu warnen, ein Warnsignal 38 für den Fahrer ausgeben und eine Fehlermeldung zu weiteren Verarbeitung in anderen Fahrzeugrechnern über den Anschluss 48 des Fahrzeugbusses (CAN) senden.

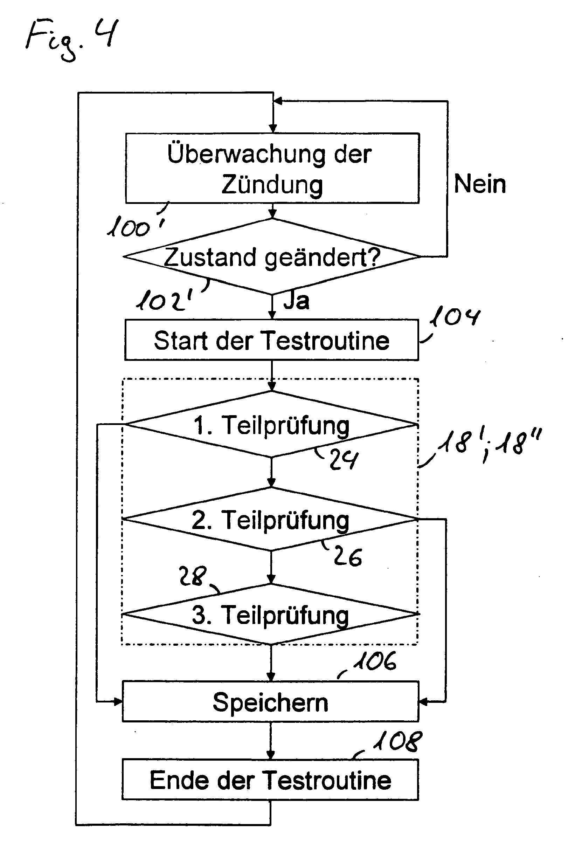

Figur 4 zeigt ein Flussdiagramm zur Veranschaulichung einer zweiten beziehungsweise dritten Testroutine. Das in Figur 4 dargestellte Flussdiagramm unterscheidet sich insbesondere durch die Schritte 100' und 102' von dem aus Figur 3 bereits bekannten Flussdiagramm. In Schritt 100' wird die Zündung des Fahrzeugs überwacht und ausgehend von Schritt 102' eine zweite Testroutine 18' beziehungsweise eine dritte Testroutine 18" in Schritt 104 gestartet, wenn sich der Zustand der Zündung ändert, Schritt 102'-Ja. Dabei kann unterschieden werden, ob die Zündung ein- oder ausgeschaltet wird. Wird die Zündung eingeschaltet, so wird die zweite Testroutine 18' gestartet, während durch das Ausschalten der Zündung die dritte Testroutine 18" gestartet wird. Sowohl die zweite Testroutine 18' als auch die dritte Testroutine 18" umfassen analog zur ersten Testroutine 18 Teilprüfungen 24, 26, 28, die zeitlich nacheinander ausgeführt werden. Inhalt und Umfang sowie die Anzahl der auszuführenden Teilprüfungen 24, 26, 28 können sich jedoch zwischen den einzelnen Testroutinen 18, 18', 18" unterscheiden. Beispielsweise kann als Bedingung in einer der Teilprüfungen 24, 26, 28 der zweiten Testroutine 18' und/oder der dritten Testroutine 18" die Raddrehzahl berücksichtigt werden, um sicherzustellen, dass das Fahrzeug steht, während diese Bedingung nicht in die ersten Testroutine eingeht. Die Ausführungen hinsichtlich der ereignisgesteuerten ersten Testroutine 18 aus Figur 1 sind auf die zweite Testroutine 18' und die dritte Testroutine 18" übertragbar.

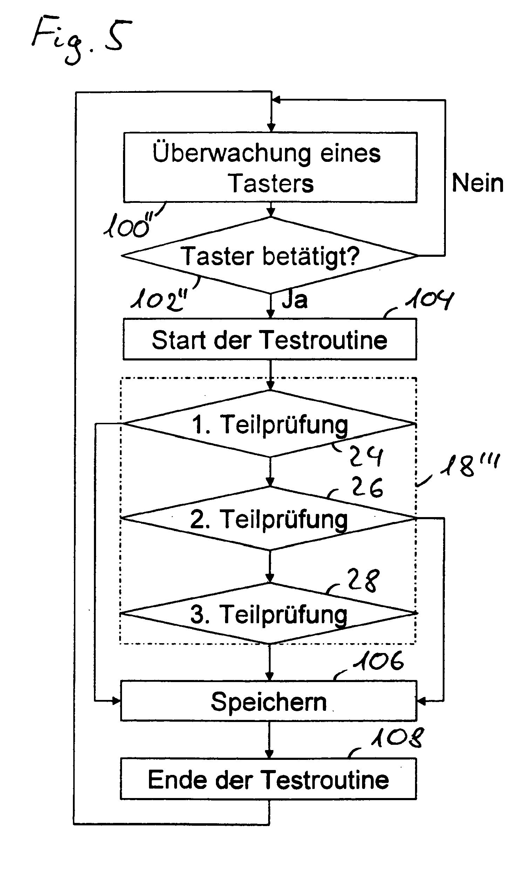

Figur 5 zeigt ein Flussdiagramm zur Veranschaulichung einer vierten Testroutine. Das in der Figur 5 dargestellte Flussdiagramm umfasst eine vierte Testroutine 18"' die im Gegensatz zu den aus den Figuren 3 und 4 bereits bekannten Testroutinen 18, 18', 18" in den Schritten 100", 102" durch das Überwachen eines Tasters in Schritt 102"-Ja gestartet wird. Auch die in Figur 5 dargestellte vierte Testroutine 18"' umfasst mehrere zeitlich nacheinander auszuführende Teilprüfungen 24, 26, 28, die sich in Anzahl und Inhalt beispielsweise von denen aus den Figuren 3 und 4 bekannten Teilprüfungen der übrigen Testroutinen 18, 18', 18" unterscheiden können. Die erste Teilprüfung 24 kann in der vierten Testroutine 18"' insbesondere eine Überprüfung eines gespeicherten Endergebnisses umfassen, wobei in Abhängigkeit eines früher festgestellten, als Endergebnis gespeicherten Defekts überprüft wird, ob der Defekt behoben ist. Dies kann insbesondere zur Wartung des Fahrzeugs vorteilhaft sein. Die Ausführungen hinsichtlich der ereignisgesteuerten ersten Testroutine 18 aus Figur 1 sind auf die vierte Testroutine 18"' übertragbar.

### Bezugszeichenliste

- 10: Feststellbremssystem
- 12: Steuergerät
- 14: Vorsteuergruppe
- 16: Feststellbremszylinder
- 18: erste Testroutine
- 18': zweite Testroutine
- 18": dritte Testroutine
- 18"': vierte Testroutine
- 20: Zündung
- 22: Taster
- 24: 1.Teilprüfung
- 26: 2.Teilprüfung
- 28: 3.Teilprüfung
- 30: flüchtiger Speicher
- 32: nicht flüchtiger Speicher
- 34: Notlösevorrichtung
- 36: Bremslicht
- 38: Wamsignal
- 40: Notlösegeber
- 42: Feststellbremsgeber
- 44: Notlöseverdrahtung
- 46: EBS-Steuergerät
- 48: Anschluss CAN
- 50: Anschluss Anhänger
- 52: Anschluss Betriebsbremse
- 54: Anschlussdose
- 56: Anhänger
- 58: Anhängersteuermodul
- 60: Wechselventil
- 62: Ventileinrichtung
- 64: weitere Ventileinrichtung
- 66: Relaisventil
- 68: Entlüftungsausgang
- 70: Druckluftleitungsstecker
- 72: weiterer Druckluftleitungsstecker
- 74: Anschlussmodul
- 76: Druckluftvorrat
- 78: Druckluftversorgung
- 80: Druckluftvorratsbehälter
- 82: Dauerspannung
- 84: Energiespeicher
- 86: Steueranschluss
- 100: Überwachung der Beschleunigung a
- 100': Überwachen der Zündung
- 100": Überwachen eines Tasters
- 102: a < a_{g}?
- 102': Zustand geändert?
- 102": Taster betätigt?
- 104: Start der Testroutine
- 106: Speichern
- 108: Ende der Testroutine

## Patentansprüche

1. Verfahren zum Betreiben eines elektrisch gesteuerten feststellbremssystems (10) eines Fahrzeugs, insbesondere eines Nutzfahrzeugs, mit einem elektronischen Steuergerät (12), einer elektropneumatischen Vorsteuergruppe (14) und einem Feststellbremszylinder (16), **dadurch gekennzeichnet, dass** ein Beschleunigungswert a des Fahrzeugs überwacht wird und bei Unterschreitung eines vorgebbaren negativen Beschleunigungsschwellwertes a_{g} das elektrisch gesteuerte Feststellbremssystem (10) durch eine erste Testroutine (18) überprüft wird.

2. Verfahren nach Anspruch 1, **dadurch gekennzeichnet, dass** das elektrisch gesteuerte Feststellbremssystem (10) nach dem Ausschalten einer Zündung (20) durch eine zweite Testroutine (18') überprüft wird.

3. Verfahren nach Anspruch 1 oder 2, **dadurch gekennzeichnet, dass** das elektrisch gesteuerte Feststellbremssystem (10) nach dem Einschalten einer Zündung (20) durch eine dritte Testroutine (18") überprüft wird.

4. Verfahren nach einem der vorhergehenden Ansprüche, **dadurch gekennzeichnet, dass** das elektrisch gesteuerte Feststellbremssystem (10) nach dem manuellen Betätigen eines Tasters (22) durch eine vierte Testroutine (18"') überprüft wird.

5. Verfahren nach einem der vorhergehenden Ansprüche, **dadurch gekennzeichnet, dass** ein Endergebnis der Testroutine (18, 18', 18", 18"') gespeichert wird.

6. Verfahren nach einem der vorhergehenden Ansprüche, **dadurch gekennzeichnet,**
- **dass** die Testroutine (18, 18', 18", 18"') Teilprüfungen (24, 26, 28) umfasst, die nacheinander durchgeführt werden,
- **dass** die Testroutine (18, 18', 18", 18"') nach einer Teilprüfung (24; 26; 28) abgebrochen wird, wenn ein Ergebnis dieser Teilprüfung (24; 26; 28) das Endergebnis der Testroutine (18, 18', 18", 18"') festlegt, und
- **dass** das Ergebnis als Endergebnis übernommen wird.

7. Verfahren nach einem der vorhergehenden Ansprüche, **dadurch gekennzeichnet, dass** Daten der Testroutine (18, 18', 18", 18"') in flüchtigem Speicher (30) vorgehalten werden und das Endergebnis in nicht flüchtigen Speicher (32) geschrieben wird.

8. Verfahren nach einem der vorhergehenden Ansprüche, **dadurch gekennzeichnet, dass** der Feststellbremszylinder (16) über eine Notlösevorrichtung (34) belüftet wird, wenn ein Fehler des elektrischen Feststellbremssystems (10) erkannt wird.

9. Verfahren nach einem der vorhergehenden Ansprüche, **dadurch gekennzeichnet, dass** ein Bremslicht (36) des Fahrzeugs aktiviert wird, wenn ein Fehler des elektrischen Feststellbremssystems (10) erkannt wird.

10. Verfahren nach einem der vorhergehenden Ansprüche, **dadurch gekennzeichnet, dass** eine Wiederinbetriebnahme des Fahrzeugs nach dem Einschalten einer Zündung (20) unterbunden wird, wenn ein Fehler des elektrischen Feststellbremssystems (10) erkannt wird.

11. Verfahren nach Anspruch 10, **dadurch gekennzeichnet, dass** bei Erkennung einer Notsituation eine Wiederinbetriebnahme des Fahrzeugs auch bei einem erkannten Defekt des elektrischen Feststellbremssystems (10) erlaubt wird.

12. Verfahren nach einem der vorhergehenden Ansprüche, **dadurch gekennzeichnet, dass** ein Warnsignal (38) an den Fahrer ausgegeben wird, wenn ein Fehler des elektrischen Feststellbremssystems (10) erkannt wird.

13. Elektronisches Steuergerät (12), das zur Durchführung eines erfindungsgemäßen Verfahrens nach einem der vorhergehenden Ansprüche eingerichtet ist.

## Claims

1. Method of operating an electrically controlled parking brake system (10) of a vehicle, in particular a commercial vehicle, comprising an electronic controller (12), an electro-pneumatic pilot control module (14) and a parking brake cylinder (16), **characterized in that** an acceleration value a of the vehicle is monitored and, when the level drops below a predeterminable negative acceleration threshold value *a_{g}*, the electrically controlled parking brake system (10) is checked by a first testing routine (18).

2. Method according to Claim 1, **characterized in that** said electrically controlled parking brake system (10) is checked by a second testing routine (18') after an ignition system (20) has been turned off.

3. Method according to Claim 1 or 2, **characterized in that** said electrically controlled parking brake system (10) is checked by a third testing routine (18") after an ignition system (20) has been turned on.

4. Method according to any of the preceding Claims, **characterized in that** said electrically controlled parking brake system (10) is checked by a fourth testing routine (18"') after manual operation of a key-operated switch (22).

5. Method according to any of the preceding Claims, **characterized in that** a final result of said testing routine (18, 18', 18", 18"') is stored.

6. Method according to any of the preceding Claims, **characterized in**
- **that** said testing routine (18, 18', 18", 18"') comprises testing subroutines (24, 26, 28) that are performed in succession,
- **that** said testing routine (18, 18', 18", 18"') is interrupted after execution of a testing subroutine (24; 26; 28) when a result of that testing subroutine determines the final result of said testing routine (18, 18', 18", 18"'), and
- **that** the result is accepted as final result.

7. Method according to any of the preceding Claims, **characterized in that** data of said testing routine (18, 18', 18", 18"') is kept in volatile memories (30) and that the final result is written into non-volatile memories (32).

8. Method according to any of the preceding Claims, **characterized in that** said parking brake cylinder (16) is aerated via an emergency release device (34) when a fault in said electrical parking brake system (10) has been recognized.

9. Method according to any of the preceding Claims, **characterized in that** a braking light (36) of the vehicle is activated when a fault in said electrical parking brake system (10) has been recognized.

10. Method according to any of the preceding Claims, **characterized in that** a restart of the vehicle after start of an ignition system (20) is prevented when a fault in said electrical parking brake system (10) has been recognized.

11. Method according to Claim 10, **characterized in that** when an emergency situation is recognized a restart of the vehicle is permitted also in the case of a detected defect in said electrical parking brake system (10).

12. Method according to any of the preceding Claims, **characterized in that** a warning signal (38) is issued to the driver when a fault in said electrical parking brake system (10) has been recognized.

13. Electronic controller (12) designed for performing an inventive method according to any of the preceding Claims.

## Revendications

1. Procédé pour faire fonctionner un système (10) de frein de stationnement commandé électriquement d'un véhicule, notamment un véhicule utilitaire, comprenant un appareil (12) électronique de commande, un groupe (14) électropneumatique de pilotage et un cylindre (16) de frein de stationnement, **caractérisé en ce que** l'on contrôle une valeur a d'accélération du véhicule et, si on passe en dessous d'une valeur a_{g} de seuil d'accélération négative pouvant être prescrite, on contrôle le système (10) de frein de stationnement commandé électriquement par une première routine (18) de test.

2. Procédé suivant la revendication 1, **caractérisé en ce que** l'on contrôle le système (10) de frein de stationnement commandé électroniquement après la mise hors circuit d'un allumage (20) par une deuxième routine (18') de test.

3. Procédé suivant la revendication 1 ou 2, **caractérisé en ce que** l'on contrôle le système (10) de frein de stationnement commandé électriquement après la mise en circuit d'un allumage par une troisième routine (18") de test.

4. Procédé suivant l'une des revendications précédentes, **caractérisé en ce que** l'on contrôle le système (10) de frein de stationnement commandé électriquement après l'actionnement manuel d'une touche (22) par une quatrième routine (18"') de test.

5. Procédé suivant l'une des revendications précédentes, **caractérisé en ce que** l'on mémorise un résultat final des routines (18, 18', 18", 18"') de test.

6. Procédé suivant l'une des revendications précédentes, **caractérisé en ce que** l'on
- **en ce que** les routines (18, 18, 18, 18"') de test comprennent des contrôles (24, 26, 28) partiels qui sont effectués les uns après les autres,
- **en ce que** l'on interrompt la routine (18, 18, 18, 18"') de test après un contrôle (24, 26, 28) partiel, si un résultat de ce contrôle (24, 26, 28) partiel fixe le résultat final de la routine (18, 18, 18, 18"') de test, et
- **en ce que** l'on prend le résultat comme étant le résultat final.

7. Procédé suivant l'une des revendications précédentes, **caractérisé en ce que** l'on conserve les données des routines (18, 18, 18, 18"') de test dans une mémoire (30) non rémanente et **en ce que** l'on écrit le résultat final dans des mémoires (32) rémanentes.

8. Procédé suivant l'une des revendications précédentes, **caractérisé en ce que** l'on met le cylindre (16) de frein de stationnement à l'atmosphère par un dispositif (34) de desserrage d'urgence, lorsque l'on détecte une erreur du système (10) de frein de stationnement électrique.

9. Procédé suivant l'une des revendications précédentes, **caractérisé en ce que** l'on active un feu (36) de freinage du véhicule, si l'on détecte une erreur du système (10) de frein de stationnement électrique.

10. Procédé suivant l'une des revendications précédentes, **caractérisé en ce que** l'on supprime une remise en fonctionnement du véhicule après la mise en circuit d'un allumage (20), si on détecte une erreur du système (10) de frein de stationnement électrique.

11. Procédé suivant la revendication 10, **caractérisé en ce que**, lorsque l'on détecte une situation d'urgence, on permet une remise en fonctionnement du véhicule, même lorsqu'un défaut du système (10) de frein de stationnement électrique a été détecté.

12. Procédé suivant l'une des revendications précédentes, **caractérisé en ce que** l'on émet un signal (38) d'avertissement du conducteur lorsqu'une erreur du système (10) de frein de stationnement électrique est détectée.

13. Appareil (12) électronique de commande, qui est conçu pour la mise en oeuvre d'un procédé suivant l'invention selon l'une des revendications précédentes.
